# FASCICULE DE BREVET EUROPEEN

(11) **EP 1 021 960 B1**
(45) Date de publication et mention de la délivrance du brevet: **28.08.2002**
(21) Numéro de dépôt: 00460010.2
(22) Date de dépôt: 25.01.2000
(51) Int. Cl.: A23K 1/14, A23K 1/18

(54) **Aliment pour poules pondeuses destiné à la production d'oeufs enrichis en acides gras (n-3) polyinsaturés et procédé d'alimentation correspondant**
Futter für Legehennen zur Herstellung von mit N-3 polyungesättigten Fettsäuren angereicherten Eiern und Fütterungsverfahren
Feed for laying hens for producing n-3 polyunsaturated fatty acid-enriched eggs and feeding method

(30) Priorité: 25.01.1999 FR 9900914
(43) Date de publication de la demande: 26.07.2000
(73) Titulaire: Valorex SA, Javene 35133 (FR)
(72) Inventeur: Weill, Pierre, 35770 Vern sur Seiche (FR)
(74) Mandataire: Bloch, Gérard

(56) Documents cités:
- WO-A-92/16114
- WO-A-95/21539
- WO-A-98/47389
- NL-A- 8 303 660
- G. RICHTER: "Untersuchungen zum Einsatz von Leinkuchen bei Legehennen" ARCHIV FUER GEFLUEGELKUNDE, vol. 62, no. 6, 1998, pages 264-272, XP002137085 VERLAG EUGEN ULMER GMBH, DE ISSN: 0003-9098

## Description

L'invention concerne le domaine de l'alimentation animale et plus précisément le domaine de l'alimentation des poules pondeuses.

Plus précisément, l'invention se rapporte à un aliment spécialement conçu pour la production d'oeufs enrichis en acides gras (n-3) polyinsaturés.

Les principaux acides gras polyinsaturés présentent une première insaturation se situant soit sur le troisième atome de carbone, soit sur le sixième atome de carbone. Les premiers sont dits (n-3) polyinsaturés ou insaturés en oméga-3 et les seconds (n-6) polyinsaturés ou insaturés en oméga-6.

Pour mémoire, on rappelle que les acides gras (n-3) polyinsaturés sont essentiellement constitués par :
- l'acide alpha-linolénique (ALA), souvent désigné par C18:3 (n-3) et précurseur de tous les acides gras (n-3) polyinsaturés;
- l'acide eicosapentaénoïque (EPA), C20:5 (n-3);
- l'acide docosapentaénoïque (DPA), C22:5 (n-3);
- l'acide docosahexaénoïque (DHA), C22:6 (n-3).

De nombreuses études ont montré les rôles physiologiques importants joués chez l'homme par ces molécules. On a ainsi notamment mis en évidence que les acides gras (n-3) polyinsaturés favorisent la fluidité du sang et que leur absorption permet de diminuer les risques cardio-vasculaires liés à une triglycéridémie trop élevée. Plus précisément, il a été démontré que la présence dans l'alimentation quotidienne des acides gras (n-3) polyinsaturés conditionne le métabolisme lipidique et diminue les risques de maladies cardio-vasculaires en abaissant le taux de triglycérides sériques. D'autres études ont montré l'implication de ces molécules dans la fonction sexuelle et la résistance aux infections.

Les maladies cardio-vasculaires représentent la première cause de mortalité dans les pays occidentaux. Or, dans ces pays, l'alimentation humaine est le plus souvent carencée en acides gras (n-3) polyinsaturés. Il est ainsi souhaitable pour l'homme de consommer des aliments présentant une teneur importante en acides gras (n-3) polyinsaturés.

L'objectif principal de la présente invention est donc de permettre la production d'un aliment abondamment utilisé dans l'alimentation humaine, à savoir les oeufs, enrichis en acides gras (n-3) polyinsaturés.

Cet objectif est atteint grâce à un aliment pour poules poudeuses permettant de produire de tels oeufs enrichis en acides gras (n-3) polyinsaturés caractérisé en ce qu'il est constitué au moins en partie de graines de lin extrudées et en ce qu'il est essentiellement exempt de graines de lin brutes et/ou d'huile de lin pure.

La graine de lin présente le double intérêt d'être constituée d'environ 40 % d'huile présentant une teneur très élevé en ALA, de l'ordre de 55 % et de contenir entre 20 et 25 % de protéines. Toutefois, cette graine présente également l'inconvénient d'être riche en mucilages et en facteurs anti-nutritionnels (agents cyanogènes) la rendant relativement toxique. La caractéristique essentielle de l'invention réside dans l'utilisation de graines de lin qui ne se présentent pas sous forme brute mais qui ont subi une extrusion, ce traitement permettant de détoxifier les graines de lin.

On notera en effet qu'il a déjà été proposé dans l'état de la technique un aliment pour la production d'oeufs enrichis en acides gras (n-3) polyinsaturés constitué de :
- 1,5 % à 2,5 % en poids d'huile(s) de poisson(s) ;
- 1% à 4 % d'huile de lin (pure ou sous forme de graines brutes) ;
- une quantité efficace d'antioxydant.

Une telle composition, décrite dans la demande de brevet internationale PCT WO 95/21539, présente de nombreux inconvénients.

En premier lieu, et comme indiqué ci-dessus, la graine de lin ou l'huile de lin ne peut être utilisée efficacement comme seule source d'apport en acides gras (n-3) polyinsaturés dans la mesure où sa teneur en mucilages et en facteurs antinutritionnels la rend très difficile à digérer par les poules.

En second lieu, l'huile de lin (utilisée dans le domaine des peintures) est peu disponible.

On notera également que les huiles de poissons incluses dans cet aliment ont tendance à donner aux oeufs un goût désagréable provoqué par l'augmentation de la teneur en EPA, en DPA et en DHA qu'ils induisent.

Enfin, le mélange graine ou huile de lin et huile de poisson peut parfois être difficile à effectuer dans des conditions économiquement intéressantes, notamment du fait de son caractère visqueux.

Il a également été proposé dans l'état de la technique d'inclure dans l'alimentation des poules des graines de lin brutes. Il est fait état d'une telle technique notamment dans l'article "alpha-linolenic acid for designing poultry products for human consumption" par Jeong S. Sim and G.Cherian, compte-rendu de la 55ème conférence du Flax Institute of the United States, Fargo, USA 26-28 janvier 1994, pp.106-122.

Toutefois, une telle méthode ne permet pas d'augmenter de façon intéressante le taux de fixation des acides gras polyinsaturés dans les oeufs. De plus, comme indiqué ci-dessus, du fait du caractère peu digestible des graines de lin brutes, seules de faibles quantité de graines peuvent être utilisées sans inconvénients zootechniques.

L'invention permet de pallier ces différents inconvénients en proposant de faire subir aux graines de lin un traitement d'extrusion. Un tel traitement, qui combine un action mécanique et l'action de la vapeur, permet de faire éclater les cellules des graines, de libérer les constituants de celles-ci et de favoriser leur hydrolyse. Ce procédé consiste à forcer, en présence de vapeur à une température d'environ 125°C le produit à travers une filière en le comprimant à l'aide d'une vis tournant à grande vitesse. L'extrusion permet d'obtenir des modifications importantes des propriétés physico-chimiques des constituants de la substance extrudée et une amélioration notable de sa digestibilité par la destruction des facteurs anti-nutritionnels, la suppression des germes contaminants et l'élimination des odeurs désagréables. Compte-tenu de la forte sensibilité à la chaleur des facteurs anti-nutritionnels cyanogènes de la graine de lin, l'extrusion

L'emploi de graines de lin brutes ou broyées a été décrit dans WO 98/47389 s'est avérée être une technique particulièrement efficace pour détoxifier ces graines de lin.

Outre l'amélioration du taux de fixation des acides gras (n-3) polyinsaturés dans les oeufs, l'aliment selon la présente invention permet également, par rapport aux aliments classiques administrés aux poules pondeuses, d'améliorer la teneur en énergie métabolisable et d'améliorer la digestibilité de l'ensemble de l'aliment.

On notera également qu'une particularité de la graine de lin est de favoriser la fixation de l'ALA sans améliorer notablement la fixation de l'EPA et du DHA. En conséquence, le procédé selon l'invention n'implique pas de goût désagréable des oeufs pondus par les poules auxquelles il a été administré.

Enfin, on notera aussi que la graine de lin extrudée présente une viscosité inférieure à celle de la graine de lin brute qui rend son utilisation plus aisée.

Selon un aspect préférentiel de l'invention, l'aliment en question est par ailleurs totalement exempt d'agent anti-oxydant. Une telle caractéristique répond au besoin grandissant du consommateur de voir la nourriture des animaux exempte de tout produit chimique.

Egalement préférentiellement, l'aliment selon l'invention comprend entre 1% et 15 %en poids de graines de lin extrudées. De façon préférée entre toutes, cette teneur sera comprise entre 2 % et 10 % en poids de graines de lin extrudées. Le reste de l'aliment pourra être constitué de différents ingrédients classiquement inclus dans les aliments pour poules pondeuses tels que notamment, mais non exclusivement, des graines de soja, des issues de céréales et des tourteaux.

L'invention concerne également un complément alimentaire pouvant être ajouté à un aliment classique pour poules pondeuses pour la production d'oeufs enrichis en acides gras (n-3) polyinsaturés, caractérisé en ce qu'il est constitué au moins en partie de graines de lin extrudées et en ce qu'il est exempt de graines de lin brutes et/ou d'huile de lin pure.

Préférentiellement, un tel complément alimentaire compredra entre 30 % et 70% en poids de graines de lin extrudées.

Enfin, l'invention concerne également un procédé d'alimentation de poules pondeuses caractérisé en ce qu'il consiste à apporter une ration journalière d'un aliment tel que décrit ci-dessus comprise entre 100 g et 150 g.

Préférentiellement, le procédé consiste à ajouter à la ration journalière classique des poules un complément alimentaire tel que décrit ci-dessus à raison d'envrion 2 à 25 g par jour

L'invention, ainsi que les différents avantages qu'elle présente, seront plus facilement compris grâce à la description qui va suivre d'un mode de réalisation de celle-ci, donné à titre purement illustratif.

Un aliment pour poules pondeuses selon la présente invention (aliment X) a été réalisé. La composition pondérale de celui-ci est donnée ci-après :
- graines de lin extrudées : 50 % en poids
- son de blé : 29 % en poids
- luzerne : 2 % en poids
- tourteaux de tournesol : 19% en poids

Le traitement d'extrusion des graines de lin a consisté dans les étapes suivantes.
- broyage ;
- préconditionnement par imprégnation de vapeur ;
- maturation (30 mn à 90°C sous atmosphère saturée de vapeur);
- extrusion ;
- séchage par injection d'air chaud.

Cet aliment X présente les propriétés et teneurs (au kg brut) suivantes :

| | |
|---|---|
| Humidité | 10 % |
| Matières protéiques brutes | 20 % |
| Matières grasses | 20 % |
| Cendres brutes | 6 % |
| Cellulose brute | 11 % |
| Amidon | 10 % |

Ce produit extrudé contenant 50 % en poids de graines de lin extrudées a été introduit dans la ration alimentaire des pondeuses à hauteur de 12 % de leur ration quotidienne, correspondant à 6 % de graines de lin.

Un aliment Y similaire à l'aliment X a été réalisé simplement en remplaçant les 6 % en poids de graines de lin extrudées par 10 % en poids de graines de lin brutes. Un aliment Y'similaire à l'aliment X a été réalisé simplement en remplaçant les 6 % en poids de graines de lin extrudées par 20 % en poids de graines de lin brutes
25 poules (lot 1) ont été nourries avec l'aliment X à raison d'une ration journalière de 125 g par poule.
25 autres poules (lot 2) ont été nourries avec l'aliment Y à raison d'une ration journalière de 125 g par poule.
25 autres poules (lot 3) ont été nourries avec l'aliment Y' à raison d'une ration journalière de 125 g par poule.

Au bout de 15 jours, les taux d'acide gras (n-3) polyinsaturés ont été mesurés dans les oeufs pondus par ces poules et comparés aux taux d'acides gras mesurés avant de leur administrer cette alimentation.

**Tableau 1**

| ALIMENT | Y | Y' | X |
|---|---|---|---|
| Teneur pondérales en graines de lin crues | 10 % | 20 % | - |
| Teneur pondérales en graines de lin extrudées | - | - | 6% |
| Apport alimentaire global en (n-3) en mg/jour | 2613 | 5225 | 1568 |
| Teneur en (n-3) des oeufs en mg/ oeuf avant régime | 40 | 46 | 50 |
| Teneur en (n-3) des oeufs en mg/ oeuf après régime | 300 | 580 | 383 |
| Accroissement | 260 | 534 | 333 |
| Taux de dépôt | 10% | 10% | 21% |

On notera que tous ces essais ont été effectués avec des graines de lin possédant une teneur constante de 38 % en huile, ladite huile présentant un taux constant de 55 % d'acides gras (n-3) polyinsaturés. Tous les oeufs présentaient de plus un poids d'environ 60 g et une teneur en matière grasse de 6,5 g environ.

Comme l'indique clairement le tableau 1, l'utilisation de graines de lin extrudées permet quasiment de doubler le taux de fixation des acides gras (n-3) polyinsaturés dans les oeufs, par rapport à l'utilisation de graines de lin brutes.

Ce résultats est atteint en utilisant une teneur en graines de seulement 6 % en poids dans l'aliment X alors que les aliments Y et Y' contiennent respectivement 10 et 20 % en poids de graines de lin brutes.

L'extrusion des graines de lin présente donc un intérêt particulier pour la production d'un aliment pour poules pondeuses.

## Revendications

1. Aliment pour poules pondeuses destiné à la production d'oeufs enrichis en acides gras (n-3) polyinsaturés, **caractérisé en ce qu'**il est constitué au moins en partie de graines de lin extrudées et **en ce qu'**il est essentiellement exempt de graines de lin brutes et/ou d'huile de lin pure.

2. Aliment pour poules pondeuses selon la revendication 1 **caractérisé en ce qu'**il est exempt d'agent anti-oxydant.

3. Aliment pour poules pondeuses selon l'une quelconque des revendications 1 ou 2 **caractérisé en ce qu'**il comprend entre 1 % et 15 % en poids de graines de lin extrudées.

4. Aliment pour poules pondeuses selon la revendication 3 **caractérisé en ce qu'**il comprend entre 2 % et 10 % en poids de graines de lin extrudées.

5. Complément alimentaire destiné à être ajouté à un aliment classique pour poules pondeuses pour la production d'oeufs enrichis en acides gras (n-3) polyinsaturés, **caractérisé en ce qu'**il est constitué au moins en partie de graines de lin extrudées et **en ce qu'**il est exempt de graines de lin brutes et/ou d'huile de lin pure.

6. Complément alimentaire selon la revendication 5 **caractérisé en ce qu'**il comprend entre 30 % et 70 % en poids de graines de lin extrudées.

7. Procédé d'alimentation de poules pondeuses **caractérisé en ce qu'**il consiste à apporter une ration journalière d'un aliment selon l'une quelconque des revendications 1 à 4 comprise entre 100 g et 150 g.

8. Procédé d'alimentation de poules pondeuses **caractérisé en ce qu'**il consiste à ajouter à la ration journalière classique des poules un complément alimentaire selon l'une quelconque des revendications 5 ou 6 à raison d'environ 2 g à 25 g par jour.

## Patentansprüche

1. Futter für Legehennen zur Produktion von mit mehrfach ungesättigten (n-3)-Fettsäuren angereicherten Eiern, **dadurch gekennzeichnet, daß** es wenigstens teilweise aus extrudierten Leinsamen aufgebaut ist und im wesentlichen frei von Rohleinsamen und/oder von reinem Leinöl ist.

2. Futter für Legehennen nach Anspruch 1, **dadurch gekennzeichnet, daß** es frei von Oxidationsinhibitormitteln ist.

3. Futter für Legehennen nach Anspruch 1 oder 2, **dadurch gekennzeichnet, daß** es zwischen 1 Gew.-% und 15 Gew.-% extrudierte Leinsamen enthält.

4. Futter für Legehennen nach Anspruch 3, **dadurch gekennzeichnet, daß** es zwischen 2 Gew.-% und 10 Gew.-% extrudierte Leinsamen enthält.

5. Futterzusatz zum Beimischen zu einem klassischen Futter für Legehennen zur Produktion von mit mehrfach ungesättigten (n-3)-Fettsäuren angereicherten Eiern, **dadurch gekennzeichnet, daß** er wenigstens teilweise aus extrudierten Leinsamen aufgebaut ist und im wesentlichen frei von Rohleinsamen und/oder von reinem Leinöl ist.

6. Futterzusatz nach Anspruch 5, **dadurch gekennzeichnet, daß** er zwischen 30 Gew.-% und 70 Gew.-% extrudierte Leinsamen enthält.

7. Verfahren zur Fütterung von Legehennen, **dadurch gekennzeichnet, daß** es darin besteht, daß eine tägliche Ration eines Futters nach einem der Ansprüche 1 bis 4 zwischen 100 g und 150 g zugeführt wird.

8. Verfahren zur Fütterung von Legehennen, **dadurch gekennzeichnet, daß** es darin besteht, daß der täglichen klassischen Ration der Hennen ein Futterzusatz nach Anspruch 5 oder 6 von ungefähr 2 g bis 25 g pro Tag beigemischt wird.

## Claims

1. Feed for laying hens which is intended to produce eggs enriched with (n-3) polyunsaturated fatty acids, **characterised in that** it is made up at least partially of extruded linseed and **in that** it is essentially free from raw linseed and/or pure linseed oil.

2. Feed for laying hens according to claim 1, **characterised in that** it is free from antioxidant agent.

3. Feed for laying hens according to any one of claims 1 or 2, **characterised in that** it comprises between 1% and 15% by weight extruded linseed.

4. Feed for laying hens according to claim 3, **characterised in that** it comprises between 2% and 10% by weight extruded linseed.

5. Feed supplement intended to be added to a standard feed for laying hens for producing eggs enriched with (n-3) polyunsaturated fatty acids, **characterised in that** it is made up at least partially of extruded linseed and **in that** it is free from raw linseed and/or pure linseed oil.

6. Feed supplement according to claim 5, **characterised in that** it comprises between 30% and 70% by weight extruded linseed.

7. Method of feeding laying hens, **characterised in that** it consists in providing a daily ration of a feed according to any one of claims 1 to 4 amounting to between 100 g and 150 g.

8. Method of feeding laying hens, **characterised in that** it consists in adding to the hens' standard daily ration a feed supplement according to any one of claims 5 or 6 at the rate of about 2 g to 25 g per day.
